# EUROPÄISCHE PATENTANMELDUNG

(11) **EP 1 591 400 A1**
(43) Veröffentlichungstag der Anmeldung: **02.11.2005**
(21) Anmeldenummer: 05006177.9
(22) Anmeldetag: 22.03.2005
(51) Int. Cl.: B66B 7/08, F16F 1/371, F16G 11/03

(54) **Seilpuffer, insbesondere für Aufzüge**

(30) Priorität: 28.04.2004 DE 102004020950
(71) Anmelder: BASF Aktiengesellschaft, 67056 Ludwigshafen (DE)
(72) Erfinder: Gerke, Heinz-Udo, 49448 Lemförde (DE)

(57) **Zusammenfassung**

Die Erfindung betrifft Seilpuffer basierend auf einem hohlen zylindrischen Dämpfungselement (i) auf der Basis von Polyisocyanat-Polyadditionsprodukten, wobei die äußere Mantelfläche des Dämpfungselementes (i) zumindest teilweise von einer Hülle (ii) umfasst wird

## Beschreibung

Die Erfindung betrifft Seilpuffer und Seilfederpuffer, im Folgenden zusammen als Seilpuffer bezeichnet, basierend auf einem hohlen, bevorzugt zylindrischen Dämpfungselement (i) auf der Basis von Polyisocyanat-Polyadditionsprodukten, bevorzugt auf der Basis von zelligen Polyurethanelastomeren, die ggf. Polyharnstoffstrukturen enthalten können, besonders bevorzugt auf der Basis von zelligen Polyurethanelastomeren bevorzugt mit einer Dichte nach DIN 53 420 von 200 bis 1100, bevorzugt 300 bis 800 kg/m³, einer Zugfestigkeit nach DIN 53 571 von ≥ 2, bevorzugt 2 bis 8 N/mm², einer Dehnung nach DIN 53 571 von ≥ 300, bevorzugt 300 bis 700 % und einer Weiterreißfestigkeit nach DIN 53 515 von ≥ 8, bevorzugt 8 bis 25 N/mm, wobei die äußere Mantelfläche des Dämpfungselementes (i) zumindest teilweise, bevorzugt vollständig von einer bevorzugt kompakten Hülle (ii) umfasst wird. Des weiteren bezieht sich die Erfindung auf Aufzüge umfassend Kabine und bevorzugt Gegengewicht, die an mindestens einem Seil, bevorzugt Stahlseil befestigt sind, und wobei zwischen Seil, Kabine und bevorzugt Gegengewicht mindestens ein erfindungsgemäßer Seilpuffer vorliegt.

Im Aufzugsbau werden Kabine und/oder Gegengewicht über Seilpuffer an den Seilen befestigt. Diese dienen verschiedenen Zwecken wie dem Ausgleich von Seillängen oder Seillängungen. Sie tragen zu ruckfreien Anfahr- und Abbremsvorgängen bei, also zur Komfortverbesserung und Dämpfen das Nachschwingen der Seile.

Als Seilpuffer sind z.B. solche aus Gummi und mikrozellulären Polyurethanen, beispielsweise Cellasto® Seilpuffer der Elastogran GmbH, Deutschland, bekannt. Das Angebot an Seilpuffern auf der Basis von mikrozellulären Polyurethanen ist durch die einsetzbaren Durchmesser (Seilabstände, Einbauraum) und der spezifischen Flächenpressung, der Raumdichte von üblicherweise bis zu 650 kg/m³ und dem definierten Gewicht von Kabine und Gegengewicht limitiert. Zur Abfederung höherer Gewichte werden häufig Gummipuffer und Stahlfedern eingesetzt. Diese weisen allerdings ein schlechteres Setzverhalten bzw. eine fehlende Dämpfung auf.

Aufgabe der vorliegenden Erfindung war es somit, Seilpuffer insbesondere für Aufzüge zu entwickeln, die bei gleichen Abmessungen eine höhere Lastaufnahme aufweisen.

Diese Aufgabe konnte durch die eingangs dargestellten Seilpuffer gelöst werden.

Erfindungswesentlich ist, dass der äußere Umfang, d.h. die Mantelfläche des Dämpfungselementes von einer Hülle eingefasst, d.h. ummantelt wird, und dadurch eine Erhöhung der Kraft im Kraft-Weg-Diagramm je nach Einfederung von bis über 100 % erreicht wird. Die besonders vorteilhaften mikrozellulären Polyurethanelastomere können dadurch bei größeren Gewichten zum Einsatz kommen.

Als Hülle können z.B. folgende Materialien eingesetzt werden: Gewebe und/oder Gewirke aus Kunstfasern wie z.B. Polyester-, Polyamid-, PVC-, Polypropylenfasern oder Naturfasern aus Sisal, Hanf, Leinen oder Baumwolle, welche bevorzugt in axialer Richtung elastisch sind und bevorzugt aber in radialer Richtung die Querdehnung des elastischen Dämpfungselementes (i) verhindern.

Bevorzugt wird die gesamte Mantelfläche von einem faserverstärkten Schlauch als Hülle (ii) umfasst. Derartige Schläuche sind allgemein bekannt und vielfältig im Einsatz. Es ist auch möglich und bevorzugt, dass die Mantelfläche von einem beschichteten Gewebe als Hülle (ii) umfasst wird. Als Gewebe können allgemein übliche, bevorzugt dichte, bevorzugt strapazierfähige Gewebe eingesetzt werden wie oben beschrieben, die bevorzugt mit einer Gummierung oder einem thermoplastischen Elastomer beschichtet sind. Derartige Gewebe sind z.B. als Feuerwehrschläuche bekannt.
Die Hülle (ii) weist bevorzugt eine Dicke zwischen 0,2 mm und 2 mm auf. Das Dämpfungselement (i) wird bevorzugt über seine gesamte Höhe von der Hülle (ii) umfasst.

Bevorzugt ist die Hülle (ii) haftend mit dem Dämpfungselement (i) verbunden. Dies kann erreicht werden, indem man die Hülle (ii) mit dem Dämpfungselement verklebt. Alternativ und bevorzugt kann man die haftende Verbindung derart erreichen, dass man das Dämpfungselement (i) in Kontakt mit der Hülle (ii) herstellt, bevorzugt verschäumt. Aufgrund der reaktiven Ausgangsstoffe zur Herstellung von Polyisocyanat-Polyadditionsprodukten verklebt das Polyurethan mit der Hülle.

Bevorzugt handelt es sich erfindungsgemäß um Seilpuffer. Diese Seilpuffer beinhalten in dem Hohlraum des Dämpfungselementes (i) bevorzugt ein Seil, einen Zuganker mit Auge, einen Augenanker und/oder Augenschrauben, bevorzugt ein Stahlseil.

Besonders bevorzugt sind erfindungsgemäß Aufzüge, z.B. Personen- und/oder Lastenaufzüge, bei denen das oder die Seil(e) zusätzlich zu der Kabine an einem Gegengewicht befestigt sind und zwischen Seil und Gegengewicht mindestens ein erfindungsgemäßer Seilpuffer vorliegt.

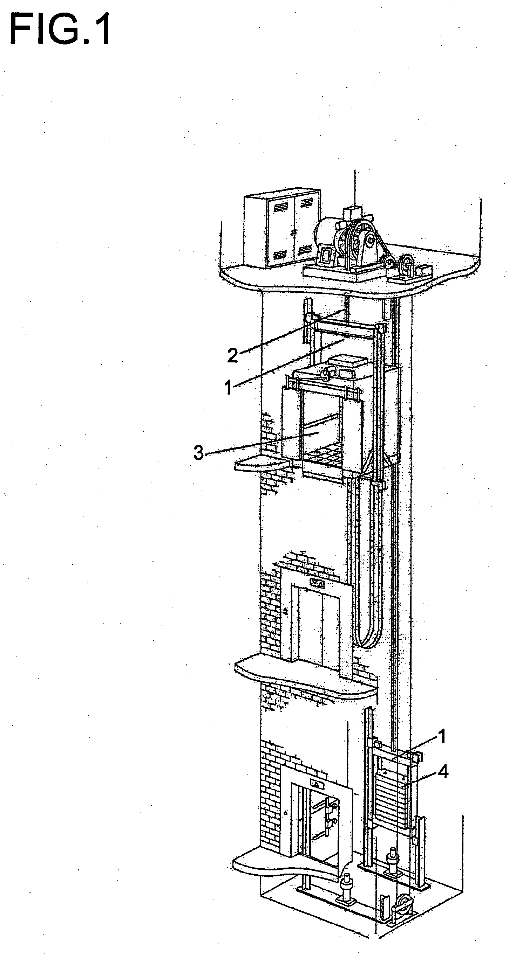

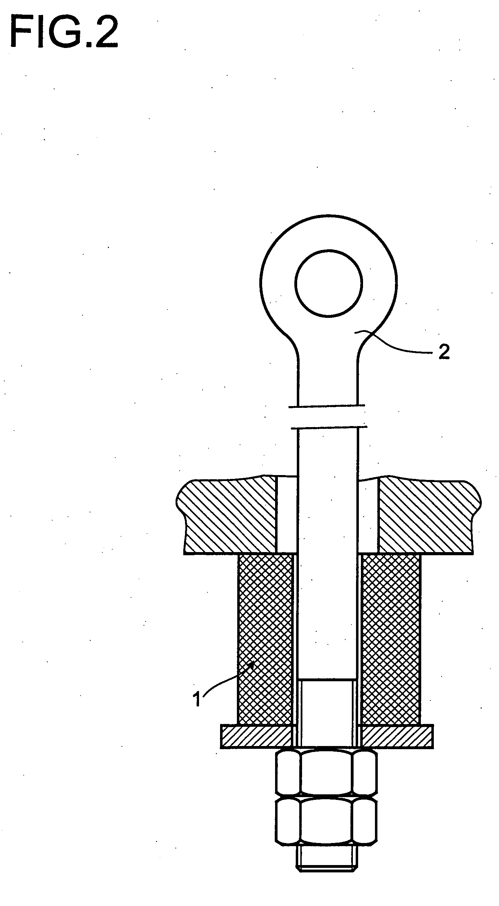

Eine beispielhafte Anordnung von Seilpuffer (1), Seil (2) und Kabine (3) bzw. Gegengewicht (4) ist in der Figur 1 dargestellt. Eine beispielhafte, bevorzugte Montageanordnung ist in der Figur 2 dargestellt, in der ebenfalls der Seilpuffer mit (1) und eine Augenschraube mit (2) bezeichnet sind. Die Augenschraube kann bevorzugt durch den Seilpuffer führen. An der Augenschraube kann bevorzugt ein Stahlseil befestigt sein.

Die erfindungsgemäßen Dämpfungselemente (i) basieren bevorzugt auf Elastomeren auf der Basis von Polyisocyanat-Polyaddionsprodukten, beispielsweise Polyurethanen und/oder Polyharnstoffen, beispielsweise Polyurethanelastomeren, die gegebenenfalls Harnstoffstrukturen enthalten können. Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm. Besonders bevorzugt besitzen die Elastomere die eingangs dargestellten physikalischen Eigenschaften. Elastomere auf der Basis von Polyisocyanat-Polyadditionsprodukten und ihre Herstellung sind allgemein bekannt und vielfältig beschreiben, beispielsweise in EP-A 62 835, EP-A 36 994, EP-A 250 969, DE-A 195 48 770 und DE-A 195 48 771.

Die Herstellung erfolgt üblicherweise durch Umsetzung von Isocyanaten mit gegenüber Isocyanaten reaktiven Verbindungen.

Die Elastomere auf der Basis von zelligen Polyisocyanat-Polyadditionsprodukte werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten. Bevorzugt kann man die Hülle in der Form platzieren und die Polyisocyanat-Polyadditionsprodukte in der Form in Gegenwart der Hülle herstellen.

Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Die Oberflächentemperatur der Forminnenwand beträgt üblicherweise 40 bis 95 °C, bevorzugt 50 bis 90°C.

Die Herstellung der Formteile wird vorteilhafterweise bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dichtschließendes Formwerkzeug gebracht werden. Die Formteile sind nach 5 bis 60 Minuten ausgehärtet und damit entformbar. Die Menge des in das Formwerkzeug eingebrachten Reaktionsgemisches wird üblicherweise so bemessen, dass die erhaltenen Formkörper die bereits dargestellte Dichte aufweisen. Die Ausgangskomponenten werden üblicherweise mit einer Temperatur von 15 bis 120°C, vorzugsweise von 30 bis 110°C, in das Formwerkzeug eingebracht. Die Verdichtungsgrade zur Herstellung der Formkörper liegen zwischen 1,1 und 8, vorzugsweise zwischen 2 und 6.

Die zelligen Polyisocyanat-Polyadditionsprodukte werden zweckmäßigerweise nach dem one shot-Verfahren mit Hilfe der Niederdruck-Technik oder insbesondere der Reaktionsspritzguss-Technik (RIM) in offenen oder vorzugsweise geschlossenen Formwerkzeugen, hergestellt. Die Reaktion wird insbesondere unter Verdichtung in einem geschlossenen Formwerkzeug durchgeführt. Die Reaktionsspritzguss-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76-84.

## Patentansprüche

1. Seilpuffer basierend auf einem hohlen Dämpfungselement (i) auf der Basis von Polyisocyanat-Polyadditionsprodukten, **dadurch gekennzeichnet, dass** die äußere Mantelfläche des Dämpfungselementes (i) zumindest teilweise von einer Hülle (ii) umfasst wird.

2. Seilpuffer gemäß Anspruch 1, **dadurch gekennzeichnet, dass** die Mantelfläche von einem faserverstärkten Schlauch als Hülle (ii) umfasst wird.

3. Seilpuffer gemäß Anspruch 1, **dadurch gekennzeichnet, dass** die Mantelfläche von einem Gewebe als Hülle (ii) umfasst wird.

4. Seilpuffer gemäß Anspruch 1, **dadurch gekennzeichnet, dass** die Hülle (ii) eine Dicke zwischen 0,2 mm und 2 mm aufweist.

5. Seilpuffer gemäß Anspruch 1, **dadurch gekennzeichnet, dass** das Dämpfungselement (i) über seine gesamte Höhe von der Hülle (ii) umfasst wird.

6. Seilpuffer gemäß Anspruch 1, **dadurch gekennzeichnet, dass** die Hülle (ii) haftend mit dem Dämpfungselement (i) verbunden ist.

7. Seilpuffer gemäß Anspruch 1, **dadurch gekennzeichnet, dass** das Dämpfungselement (i) in Kontakt mit der Hülle (ii) hergestellt ist.

8. Seilpuffer gemäß einem der Ansprüche 1 bis 7, **dadurch gekennzeichnet, dass** durch den Hohlraum des Dämpfungselementes (i) ein Seil, ein Zuganker mit Auge, ein Augenanker oder Augenschrauben geführt wird.

9. Aufzug umfassend Kabine, die an mindestens einem Seil befestigt ist, **dadurch gekennzeichnet, dass** zwischen Seil und Kabine mindestens ein Seilpuffer gemäß einem der Ansprüche 1 bis 8 vorliegt.

10. Aufzug gemäß Anspruch 9, **dadurch gekennzeichnet, dass** das oder die Seil(e) zusätzlich zu der Kabine an einem Gegengewicht befestigt sind und zwischen Seil und Gegengewicht mindestens ein Seilpuffer gemäß einem der Ansprüche 1 bis 7 vorliegt.
